# EUROPEAN PATENT APPLICATION

(11) **EP 4 846 829 A1**
(43) Date of publication of application: **02.12.2026**
(21) Application number: 25744680.7
(22) Date of filing: 23.01.2025
(51) Int. Cl.: A01D 34/00

(54) **OUTDOOR GARDEN LAWN MOWER**

(30) Priority: 25.01.2024 CN 202410106199
(71) Applicant: Jiangsu Dongcheng M&E Tools Co., Ltd., Nantong, Jiangsu 226244 (CN)
(72) Inventor: YE, Zhiming, Nantong, Jiangsu 226244 (CN); ZHANG, Shengwen, Nantong, Jiangsu 226244 (CN); YU, Wanzhao, Nantong, Jiangsu 226244 (CN)
(74) Representative: Winter, Brandl - Partnerschaft mbB
(86) International application number: PCT/CN2025/074293
(87) International publication number: WO 2025/157217

(57) **Abstract**

Provided are an outdoor garden lawn mower. The outdoor garden lawn mower includes: a main body including: a main frame, in which the main frame is provided with a seat for a user to sit, a cutting assembly configured to cut vegetation, a travelling assembly configured to support the outdoor garden lawn mower to travel on a plane in a first straight line direction, an operation assembly for the user to operate to control travelling of the outdoor garden lawn mower, and a power supply device configured to supply power to at least one of the cutting assembly and the travelling assembly; first and second mounting parts arranged on the main body, in which the first mounting part is different from the second mounting part; and at least one support assembly configured to be connected to at least one of the first and second mounting parts to support the user to get on the outdoor garden lawn mower. Since the outdoor garden lawn mower is provided with the support assembly on the main body of the outdoor garden lawn mower to support the user to get on the lawn mower, difficulty of the user getting on the lawn mower is reduced, and deformation or damage of a mowing deck caused by user stepping on the mowing deck can be effectively avoided.

## Description

### CROSS-REFERENCE TO RELATED APPLICATION

This application claims priority to the following patent application.

This application claims priority to Chinese patent application No. 202410106199.X, filed with China National Intellectual Property Administration on January 25, 2024, the entire contents of which are incorporated herein by reference.

### FIELD

The present disclosure relates to the field of lawn mower technologies, and more particularly, to an outdoor garden lawn mower.

### BACKGROUND

As a type of lawn machinery, ride-on lawn mowers are widely used for lawn and vegetation trimming. As a wheeled vehicle that requires a user to drive and operate, it is very important to improve convenience of the user getting on or off the vehicle. Most of the existing household lawn mowers are not provided with a foot pedal or are only provided with a foot pedal in front of the lawn mower, and it is easy to artificially cause mechanical damage or cause injury to the user during use.

In view of this, there is a definite need to provide an improved outdoor garden lawn mower to overcome defects existing in the prior art.

### SUMMARY

In view of deficiencies of the related art, an objective of the present disclosure is to provide an outdoor garden lawn mower that can improve convenience and safety when a user gets on or off the lawn mower.

A technical solution adopted in the present disclosure to solve the existing technical problems is to provide an outdoor garden lawn mower. The outdoor garden lawn mower includes: a main body including a main frame, in which the main frame is provided with a seat for a user to sit, a cutting assembly configured to cut vegetation, a travelling assembly configured to support the outdoor garden lawn mower to travel on a plane in a first straight line direction, an operation assembly for the user to operate to control travelling of the outdoor garden lawn mower, and a power supply device configured to supply power to at least one of the cutting assembly and the travelling assembly; a first mounting part and a second mounting part that are arranged on the main body, in which the first mounting part is different from the second mounting part; and at least one support assembly configured to be connected to at least one of the first mounting part and the second mounting part to support the user to get on the outdoor garden lawn mower.

As a further improvement of an embodiment of the present disclosure, the travelling assembly includes front travelling wheels and rotary members. Each of the front travelling wheels is supported by the respective rotary member for rotation in a radial direction of the front travelling wheel. Each of the rotary members is rotatable about a first axis as a center of rotation. A vertical distance between the first axis and the support assembly in the direction of the first straight line is greater than or equal to 150 mm and less than or equal to 300 mm.

As a further improvement of an embodiment of the present disclosure, the vertical distance between the first axis and the support assembly in the direction of the first straight line is greater than a turning radius of the front travelling wheel.

As a further improvement of an embodiment of the present disclosure, the cutting assembly further includes a cutting motor. A vertical distance between the cutting motor and the support assembly in the direction of the first straight line is greater than or equal to 50 mm and less than or equal to 500 mm.

As a further improvement of an embodiment of the present disclosure, the support assembly includes a support member. A length of the support member in the direction of the first straight line is greater than or equal to 50 mm and less than or equal to 400 mm.

As a further improvement of an embodiment of the present disclosure, the support assembly includes a support member. The travelling assembly includes rear travelling wheels, and each of the rear travelling wheels is rotatable about a second axis as a center of rotation. A width of the support member in a direction of the second axis is greater than or equal to 100 mm and less than or equal to 250 mm.

As a further improvement of an embodiment of the present disclosure, the travelling assembly includes rear travelling wheels, and each of the rear travelling wheels is rotatable about a second axis as a center of rotation. A vertical distance between the second axis and the support assembly in the direction of the first straight line is greater than or equal to 600 mm and less than or equal to 850 mm.

As a further improvement of an embodiment of the present disclosure, the cutting assembly further includes a cutting motor. The travelling assembly includes rear travelling wheels, and each of the rear travelling wheels is rotatable about a second axis as a center of rotation. A vertical distance between the cutting motor and the support assembly in a direction of the second axis is greater than or equal to 300 mm.

As a further improvement of an embodiment of the present disclosure, the travelling assembly includes two rear travelling wheels, and each of the two rear travelling wheels is rotatable about a second axis as a center of rotation. A distance between an outermost side of one of the two rear travelling wheels and an outermost side of the other one of the two rear travelling wheels in a direction of the second axis is defined as a first distance. Two support assemblies are disposed on the main body. A distance between an outermost side of one of the two support assemblies and an outermost side of the other one of the two support assemblies in the direction of the second axis is defined as a second distance. The first distance is greater than the second distance.

As a further improvement of an embodiment of the present disclosure, a vertical distance between a lowermost end of the support assembly and an uppermost end of the cutting assembly is greater than or equal to 5 mm.

As a further improvement of an embodiment of the present disclosure, a vertical distance between a lowermost end of the support assembly and the plane is greater than or equal to 120 mm and less than or equal to 800 mm.

As a further improvement of an embodiment of the present disclosure, the support assembly includes: a connector connected to the main body; a support member; and a hinge member connected to both the connector and the support member to enable the support member to pivot relative to the connector between a deployed position and a stowed position.

As a further improvement of an embodiment of the present disclosure, the connector has a guide groove formed on the connector, and the support member is provided with a guide member movable in the guide groove. When the support member is in the deployed position, the guide member is positioned at one end of the guide groove. When the support member is in the stowed position, the guide member is positioned at the other end of the guide groove.

Embodiments of the present disclosure further provide an outdoor garden lawn mower. The outdoor garden lawn mower includes: a main frame, in which the main frame is provided with a seat for a user to sit, a cutting assembly configured to cut vegetation, a travelling assembly configured to support the outdoor garden lawn mower to travel on a plane in a first straight line direction, an operation assembly for the user to operate to control travelling of the outdoor garden lawn mower, and a power supply device configured to supply power to at least one of the cutting assembly and the travelling assembly; a first mounting part and a second mounting part that are arranged on the main frame, in which the first mounting part is different from the second mounting part; and at least one support assembly configured to be connected to at least one of the first mounting part and the second mounting part, in which the at least one support assembly is removable from the first mounting part and is mountable to the second mounting part.

As a further improvement of an embodiment of the present disclosure, the first mounting part and the second mounting part are respectively located at two sides of the main frame in the direction of the first straight line.

As a further improvement of an embodiment of the present disclosure, the first mounting part has the same structure as the second mounting part.

As a further improvement of an embodiment of the present disclosure, each of the first mounting part and the second mounting part is a first connection hole formed on the main frame. The support member has a second connection hole formed on the support member. The first connection hole is connected to the second connection hole by an insertion member to assemble the support assembly to the main frame.

As a further improvement of an embodiment of the present disclosure, the travelling assembly includes front travelling wheels and rotary members. Each of the front travelling wheels is supported by the respective rotary member for rotation in a radial direction of the front travelling wheel. Each of the rotary members is rotatable about a first axis as a center of rotation. A vertical distance between the first axis and the support assembly in the direction of the first straight line is greater than or equal to 150 mm and less than or equal to 300 mm.

As a further improvement of an embodiment of the present disclosure, the travelling assembly includes rear travelling wheels, and each of the rear travelling wheels is rotatable about a second axis as a center of rotation. A vertical distance between the second axis and the support assembly in the direction of the first straight line is greater than or equal to 600 mm and less than or equal to 850 mm.

Embodiments of the present disclosure further provide an outdoor garden lawn mower. The outdoor garden lawn mower includes: a main body including a main frame, in which the main frame is provided with a seat for a user to sit, a cutting assembly configured to cut vegetation, a travelling assembly configured to support the outdoor garden lawn mower to travel on a plane in a first straight line direction, an operation assembly for the user to operate to control travelling of the outdoor garden lawn mower, and a power supply device configured to supply power to at least one of the cutting assembly and the travelling assembly; a first mounting part and a second mounting part that are arranged on the main body, in which the first mounting part is different from the second mounting part; at least one support assembly configured to be removably connected to the main body to support the user to get on the outdoor garden lawn mower; and a locking assembly disposed on the main body, in which the locking assembly has a locked state and an unlocked state. When the locking assembly is in the locked state, the support assembly is locked to the first mounting part or the second mounting part, enabling the support assembly to be connected to the main body; and when the locking assembly is in the unlocked state, the support assembly is unlocked from the first mounting part or the second mounting part, enabling the support assembly to be separated from the main body.

As a further improvement of an embodiment of the present disclosure, each of the first mounting part and the second mounting part is a first connection hole formed on the main body, and the support assembly has a second connection hole formed on the support assembly. The locking assembly is disposed adjacent to the first connection hole on the main frame and includes a mounting frame, a movable member, and an elastic member. The elastic member is connected to both the mounting frame and the movable member. The elastic member is configured to constantly apply a restoring force to the movable member, enabling the movable member to remain inserted into the first connection hole and the second connection hole when the support assembly is locked to the main body.

Embodiments of the present disclosure further provide an outdoor garden lawn mower. The outdoor garden lawn mower includes: a main frame, in which the main frame is provided with a seat for a user to sit, a cutting assembly configured to cut vegetation, a travelling assembly configured to support the outdoor garden lawn mower to travel on a plane in a first straight line direction, an operation assembly for the user to operate to control travelling of the outdoor garden lawn mower, and a power supply device configured to supply power to at least one of the cutting assembly and the travelling assembly; a first mounting part and a second mounting part that are arranged on the main frame, in which the first mounting part is different from the second mounting part; and at least one support assembly configured to be connected to at least one of the first mounting part and the second mounting part. The at least one support assembly includes a connector, a support member, and a displacement driving member connected between the connector and the support member. The displacement driving member has a first mode and a second mode. The displacement driving member is configured to: drive, in the first mode, the support member to be at least partially positioned under the main frame; and drive, in the second mode, the support member to move out from under the main frame, enabling the support member to support the user to get on the outdoor garden lawn mower.

As a further improvement of an embodiment of the present disclosure, the connector has a sliding groove formed on the connector. The support member is provided with a pulley movable in the sliding groove. A lead screw is connected between the connector and the support member. The lead screw is configured to drive, when the lead screw rotates clockwise or counterclockwise, the support member to extend out from under the main frame or retract back under the main frame.

As a further improvement of an embodiment of the present disclosure, the connector is provided with a positioning member at an end of the connector adjacent to the displacement driving member. The lead screw is disposed on the positioning member and rotatable clockwise or counterclockwise on the positioning member.

As a further improvement of an embodiment of the present disclosure, the connector is rotatably connected to the main frame. The support member is fixed to the connector and configured to rotate with the connector. The connector is further provided with a first gear, and the displacement driving member is provided with a second gear meshed with the first gear. The first gear is rotatable through driving of the second gear to drive the connector to move the support member to extend out from under the main frame or retract back under the main frame.

Compared with the related art, the present disclosure has the following beneficial effects:

The outdoor garden lawn mower according to embodiments of the present disclosure is provided with the support assembly on the main body of the outdoor garden lawn mower to support the user to get on the lawn mower. Therefore, difficulty of the user getting on the lawn mower is reduced, deformation or damage of a mowing deck caused by user stepping on the mowing deck can be effectively avoided, and user injury can be effectively avoided.

### BRIEF DESCRIPTION OF THE DRAWINGS

Specific embodiments of the present disclosure will be described in further detail below with reference to the accompanying drawings.
FIG. 1 is a left view of an outdoor garden lawn mower according to an embodiment of the present disclosure.
FIG. 2 is a top view of an outdoor garden lawn mower according to an embodiment of the present disclosure.
FIG. 3 is a perspective view of an outdoor garden lawn mower according to an embodiment of the present disclosure.
FIG. 4 is a schematic structural view of a support assembly of an outdoor garden lawn mower according to an embodiment of the present disclosure.
FIG. 5 is a schematic structural view of a first connection hole of an outdoor garden lawn mower according to an embodiment of the present disclosure.
FIG. 6 is a schematic structural view of an insertion member and a support assembly of an outdoor garden lawn mower according to an embodiment of the present disclosure.
FIG. 7 is an overall schematic structural view of an outdoor garden lawn mower provided with a locking assembly according to an embodiment of the present disclosure.
FIG. 8 is a schematic structural view of a locking assembly of an outdoor garden lawn mower according to an embodiment of the present disclosure.
FIG. 9 is a schematic structural view of a support assembly of an outdoor garden lawn mower according to another embodiment of the present disclosure.
FIG. 10 is a schematic structural view of a support assembly of an outdoor garden lawn mower according to another embodiment of the present disclosure.
FIG. 11 is a schematic structural view of a support member of the support assembly of the outdoor garden lawn mower in FIG. 10 in an extended state.
FIG. 12 is a schematic structural view of a support member of the support assembly of the outdoor garden lawn mower in FIG. 10 in a retracted state.
FIG. 13 is a schematic structural view of a support member of the outdoor garden lawn mower in FIG. 10.
FIG. 14 is a schematic structural view of a connector of the outdoor garden lawn mower in FIG. 10.
FIG. 15 is a schematic structural view of a main frame and a support assembly of an outdoor garden lawn mower according to an embodiment of the present disclosure.
FIG. 16 is a partial schematic structural view of the main frame and the support assembly of the outdoor garden lawn mower in FIG. 15.
FIG. 17 is a schematic partial structural view of the main frame and the support assembly of the outdoor garden lawn mower in FIG. 15, viewed from another perspective.
FIG. 18 is a schematic perspective structural view of an outdoor garden lawn mower according to an embodiment of the present disclosure.
FIG. 19 is a partial schematic structural view of an outdoor garden lawn mower according to an embodiment of the present disclosure.
FIG. 20 is a schematic perspective structural view of an outdoor garden lawn mower according to an embodiment of the present disclosure, viewed from another perspective.

Meanings of reference numerals in the accompanying drawings:
1, main frame; 101, first straight line; 102, first axis; 103, second axis; 11, rotary member; 12, first connection hole; 2, cutting assembly; 3, travelling assembly; 31, front travelling wheel; 32, rear travelling wheel; 4, operation assembly; 5, power supply device; 6, seat; 7, support assembly; 71, connector; 711, first gear; 712, guide groove; 713, positioning member; 714, second connection hole; 715, sliding groove; 72, support member; 721, protrusion; 722, guide member; 723, pulley; 73, displacement driving member; 731, second gear; 732, lead screw; 74, hinge member; 8, locking assembly; 81, base; 811, mounting plate; 82, movable member; 83, elastic member; 84, limiting block; 9, insertion member.

### DETAILED DESCRIPTION OF THE EMBODIMENTS

Terms used in the present disclosure are only for a purpose of describing specific embodiments, and are not intended to limit the present disclosure. The orientation or the position indicated by terms such as "over", "below", "front", and "rear" described below should be construed to refer to the orientation or the position as shown in the drawings, and is only for the convenience of describing the present disclosure and simplifying the description, rather than indicating or implying that the pointed device must have a specific orientation, or be constructed and operated in a specific orientation, and therefore cannot be understood as a limitation of the present disclosure.

An existing outdoor garden lawn mower is not provided with a foot pedal, or the foot pedal is only provided in the front of the lawn mower. Consequently, an occupant often needs to step over a front protective cover from the front of the lawn mower to get on the vehicle, or take large steps to find a foothold while avoiding a mowing deck from two sides. The occupant is likely to trip over the vehicle and get injured. If the occupant steps on the mowing deck, components of the mowing deck may be deformed or partially damaged.

Exemplarily, when a user sits on the outdoor garden lawn mower located on a plane, a direction the user faces is defined as the front, a direction the user faces away from is defined as the rear, a left-hand side is defined as the left, a right-hand side is defined as the right, a direction close to the ground is defined as the lower, and a direction away from the ground is defined as the upper.

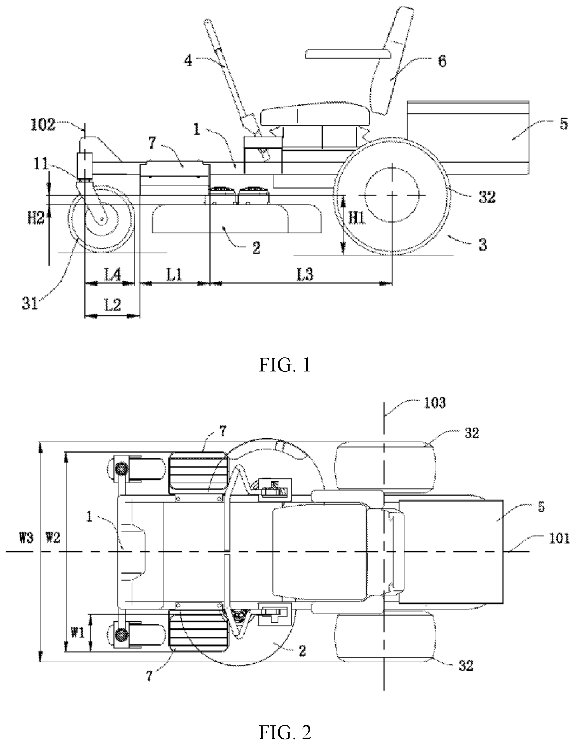

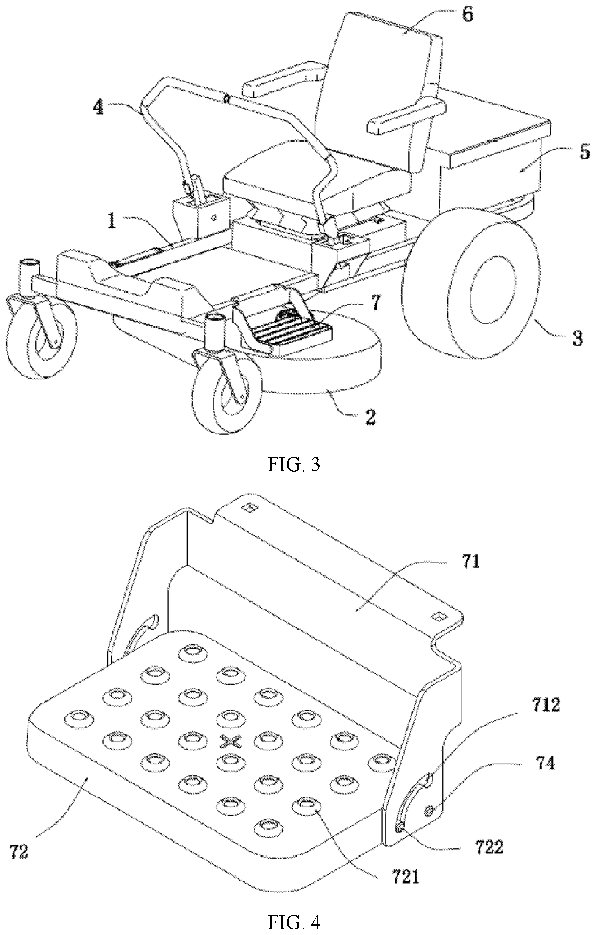

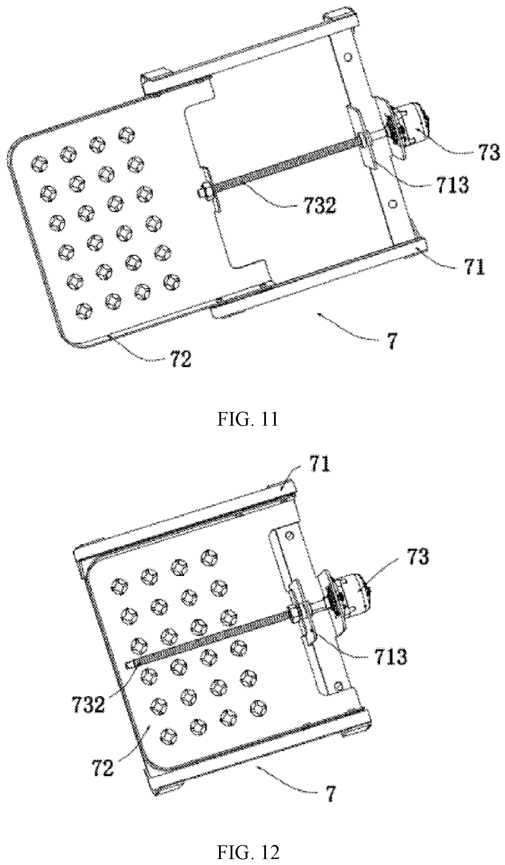

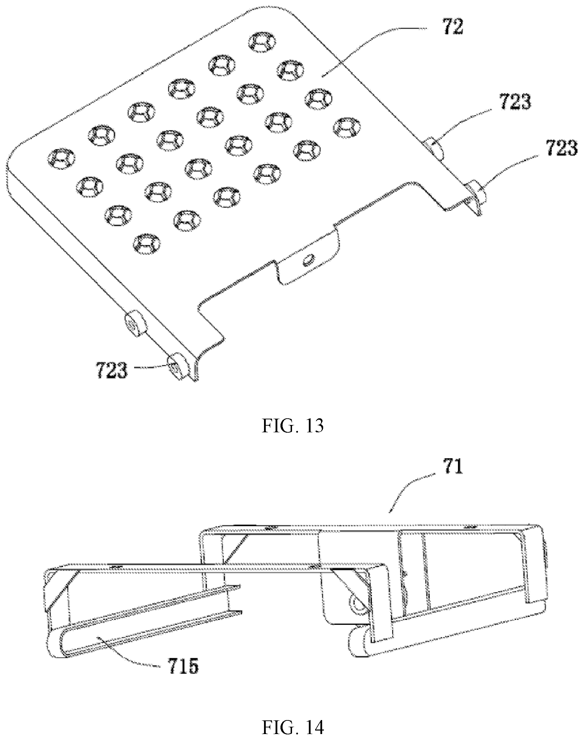

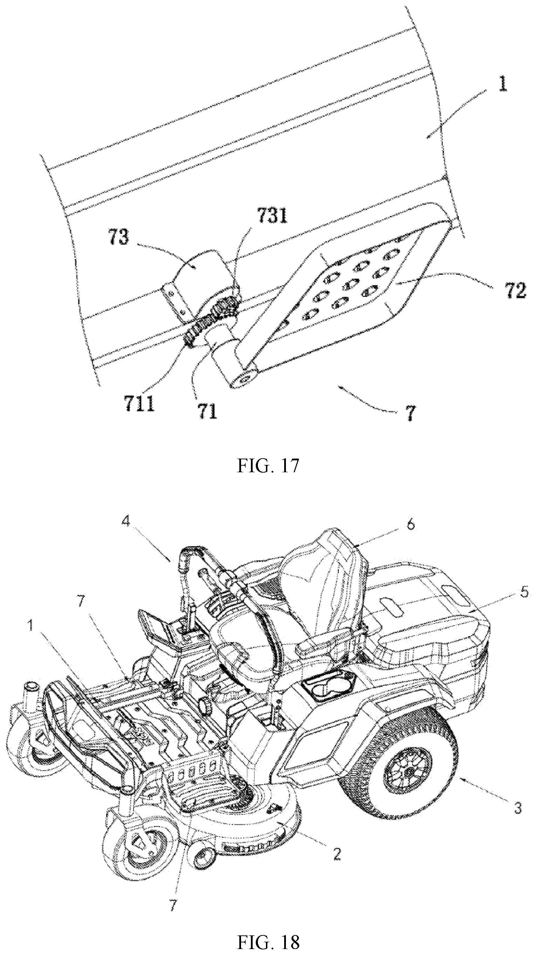

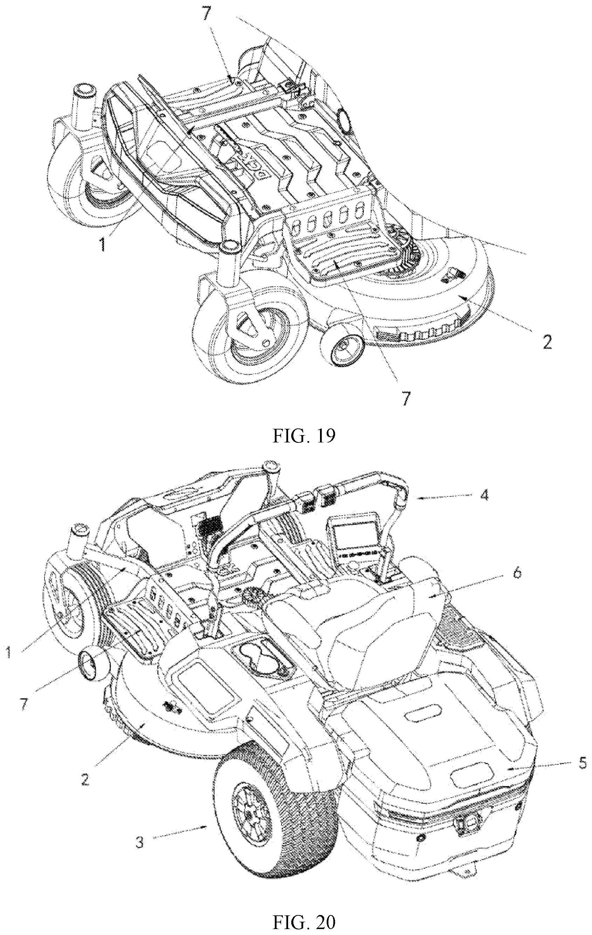

With reference to FIG. 1 to FIG. 20, an outdoor garden lawn mower according to an embodiment of the present disclosure is illustrated. The outdoor garden lawn mower is widely used in fields such as vegetation trimming. As illustrated in FIG. 3 and FIG. 18 to FIG. 20, the outdoor garden lawn mower includes a main body. The main body includes a main frame 1, a seat 6, a cutting assembly 2, a travelling assembly 3, an operation assembly 4, and a power supply device 5. The main frame 1 extends in a direction of a first straight line 101 parallel to a front-rear direction. The seat 6 is mounted to the main frame 1 for the user to sit. The main frame 1 is also configured for mounting of the cutting assembly 2, the travelling assembly 3, the operation assembly 4, and the power supply device 5. The power supply device 5 is configured to supply power to the cutting assembly 2 and the travelling assembly 5, enabling the cutting assembly 2 to perform a cutting operation and the travelling assembly 3 to support travelling of the main frame 1 and associated assemblies on the main frame 1. The outdoor garden lawn mower further includes: a first mounting part and a second mounting part that are arranged on the main body, in which the first mounting part is different from the second mounting part; and at least one support assembly 7 configured to be connected to at least one of the first mounting part and the second mounting part to support the user to get on the outdoor garden lawn mower.

As illustrated in FIG. 3 and FIG. 18 to FIG. 20, in an exemplary embodiment of the present disclosure, as a power output assembly, the cutting assembly 2 is configured to output power to realize a mowing function of an electric lawn mower. The cutting assembly 2 is arranged in one or more groups. The cutting assembly 2 is disposed under the main frame 1. In an embodiment, the cutting assembly 2 includes a cutter disc, a mowing element, and a mowing motor. The mowing element is configured to cut vegetation during high-speed rotation. For example, the mowing element is a blade for cutting vegetation on the lawn. The cutter disc has a mowing space for receiving the mowing element, and the mowing element is at least partially located in the mowing space.

In some embodiments, two mowing elements may be provided and two mowing motors may be provided. Accordingly, the two mowing motors may drive the two mowing elements respectively. In some embodiments, three mowing elements may be provided, and correspondingly three mowing motors may also be provided. The three mowing motors may drive the three mowing elements respectively. In other embodiments of the present disclosure, the cutting assembly 2 may also be removed from the outdoor garden lawn mower.

It should be understood that the cutting assembly 2 may be replaced with a snow shoveling assembly or other assemblies. Therefore, the outdoor garden lawn mower can not only cut the vegetation, but also perform functions such as snow shoveling, snow sweeping, snow blowing, and flushing by replacing the cutting assembly 2 with corresponding functional components. Those skilled in the art can make adaptive replacement of various functional components without creative efforts, and all such replacements shall fall within the scope of this embodiment.

As illustrated in FIG. 3 and FIG. 18 to FIG. 20, the travelling assembly 3 includes travelling wheels disposed on the main frame 1 and a travelling motor configured to drive the travelling wheels. The travelling wheels are disposed at two sides of the main frame 1. Therefore, a center of gravity of the outdoor garden lawn mower is kept within the main frame 1, to reduce a risk of rollover during travelling of the outdoor garden lawn mower. In an embodiment, four travelling wheels are provided, including two front travelling wheels 31 and two rear travelling wheels 32.

The front travelling wheels 31 may be universal wheels. The travelling motor is connected to the rear travelling wheels 32 and drives the rear travelling wheels 32 to rotate. Each of the two rear travelling wheels 32 is also equipped with one travelling motor. Two travelling motors may have the same rotating speed or different rotating speeds. When the user drives the outdoor garden lawn mower to travel straight, the rotating speeds of the two travelling motors are substantially equal. When the user drives the outdoor garden lawn mower to turn, the rotating speeds of the two travelling motors differ, and the outdoor garden lawn mower turns toward a side with a low motor rotating speed. In some embodiments, a diameter of the front travelling wheel 31 is smaller than a diameter of the rear travelling wheel 32. In other embodiments of the present disclosure, three or five travelling wheels may also be provided.

As illustrated in FIG. 3 and FIG. 18 to FIG. 20, the operation assembly 4 includes a first operation lever and a second operation lever respectively disposed at a left side and a right side of the outdoor garden lawn mower. The user may control the first operation lever and the second operation lever to move the outdoor garden lawn mower forward, backward, or turn. The operation assembly 4 may also be a steering wheel that can control the outdoor garden lawn mower.

As illustrated in FIG. 3 and FIG. 18 to FIG. 20, the power supply device 5 may include various types of battery packs, such as a large-capacity battery pack and a small-capacity battery pack. The large-capacity battery pack may provide the outdoor garden lawn mower with longer endurance. The small-capacity battery pack can supply power to other electric tools, including garden tools such as a grass trimmer, a pruner, a blower, and a chain saw. In addition, the small-capacity battery pack can also supply power to torque output tools such as an electric drill and an electric hammer, cutting tools such as a circular saw, a jigsaw and a reciprocating saw, or grinding tools such as an angle grinder and a sander.

It should be understood that, as illustrated in FIG. 3 and FIG. 18 to FIG. 20, since the main body includes the main frame 1, the seat 6, the cutting assembly 2, the travelling assembly 3, the operation assembly 4, and the power supply device 5, the support assembly 7 may be mounted to any one or a combination of the main frame 1, the seat 6, the cutting assembly 2, the travelling assembly 3, the operation assembly 4, and the power supply device 5. In an exemplary embodiment, the support assembly 7 is mounted on the main frame 1. The main frame 1 bears a large load and is mostly made of rigid materials with good deformation resistance. Therefore, the main frame 1 can provide better rigid support for the support assembly 7.

As illustrated in FIG. 1, in an embodiment, the travelling assembly 3 includes the front travelling wheels 31 and rotary members 11. Each of the front travelling wheels 31 is supported by the respective rotary member 11 for rotation in a radial direction of the front travelling wheel 31. Each of the rotary members 11 is rotatable about a first axis 102 as a center of rotation. A vertical distance between the first axis 102 and the support assembly 7 in the direction of the first straight line 101 is greater than or equal to 150 mm and less than or equal to 300 mm. In an exemplary embodiment of the present disclosure, the vertical distance L2 between the first axis 102 and the support assembly 7 is 150 mm, 200 mm, or 300 mm. The vertical distance between the first axis 102 and the support assembly 7 in the direction of the first straight line 101 is greater than a turning radius L4 of the front travelling wheel 31. In this way, there is a proper distance between the support assembly 7 and the front travelling wheel 31, which facilitates the user to get on or off the lawn mower without interfering with steering and travelling of the front travelling wheels 31. In an exemplary embodiment of the present disclosure, each of the rotary members 11 is a connection yoke connected to an axle of the front travelling wheel 31. In an exemplary embodiment of the present disclosure, the front travelling wheels 31 are the universal wheels.

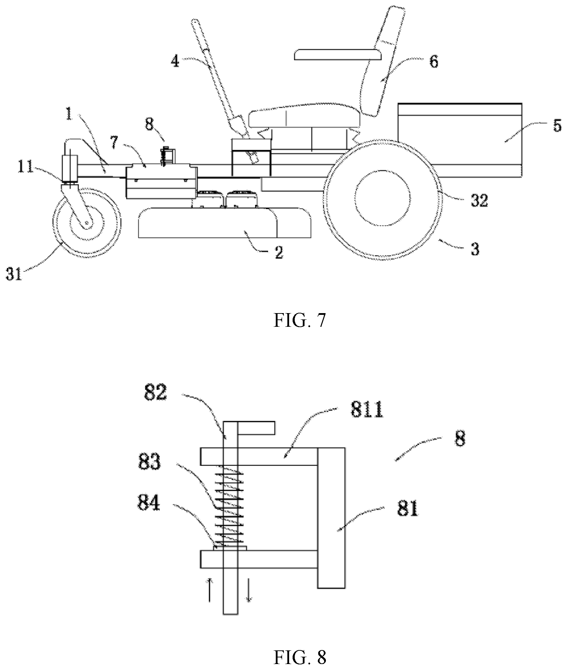

As illustrated in FIG. 8, in an embodiment, the cutting assembly 2 further includes a cutting motor. A vertical distance between the cutting motor and the support assembly 7 in the direction of the first straight line 101 is greater than or equal to 50 mm and less than or equal to 500 mm. In this way, the support assembly 7 will not interfere with the cutting motor in a front-rear direction of the outdoor garden lawn mower, and thus will not affect a normal operation of the cutting motor. In an exemplary embodiment of the present disclosure, the vertical distance between the cutting motor and the support assembly 7 is 50 mm, 200 mm, or 500 mm.

In another embodiment, the cutting assembly 2 further includes the cutting motor. A vertical distance between the cutting motor and the support assembly 7 in a direction of a second axis 103 is greater than or equal to 300 mm. In this way, the cutting motor will not interfere with the support assembly 7 in a left-right direction of the outdoor garden lawn mower. In an exemplary embodiment of the present disclosure, the vertical distance between the cutting motor and the support assembly 7 is 300 mm or 350 mm.

In an embodiment, the support assembly 7 includes a support member 72. A length L1 of the support member 72 in the direction of the first straight line 101 is greater than or equal to 50 mm and less than or equal to 400 mm. This dimension is approximately equal to a maximum outer width of two feet when standing with two feet together, and can meet various usage scenarios such as the user stepping onto the vehicle with one foot or two feet.

In an embodiment, the support assembly 7 includes the support member 72. The travelling assembly 3 includes the rear travelling wheels 32, and each of the rear travelling wheels 32 is rotatable about the second axis 103. A width W1 of the support member 72 in the direction of the second axis 103 is greater than or equal to 100 mm and less than or equal to 250 mm, which can ensure that majority of the foot area of the user falls on the support member 72 while standing.

As illustrated in FIG. 1, exemplarily, the travelling assembly 3 includes the rear travelling wheels 32, and each of the rear travelling wheels 32 is rotatable about the second axis 103. A vertical distance between the second axis 103 and the support assembly 7 in the direction of the first straight line 101 is greater than or equal to 600 mm and less than or equal to 850 mm. Such an arrangement makes a layout of the support assembly 7 on the outdoor garden lawn mower more reasonable. In an exemplary embodiment of the present disclosure, the vertical distance L3 between the second axis 103 and the support assembly 7 is 600 mm, 750 mm, or 850 mm.

As illustrated in FIG. 2, further, the travelling assembly 3 includes two rear travelling wheels 32. A distance between an outermost side of one of the two rear travelling wheels 32 and an outermost side of the other one of the two rear travelling wheels 32 in the direction of the second axis 103 is defined as a first distance W2. Two support assemblies 7 are disposed on the main body. A distance between an outermost side of one of the two support assemblies 7 and an outermost side of the other one of the two support assemblies 7 in the direction of the second axis 103 is defined as a second distance W3. The first distance W2 is greater than the second distance W3. Such an arrangement prevents the support assembly 7 from extending beyond an overall width of the outdoor garden lawn mower in the left-right direction. Thus, no extra restriction or interference will be caused to the outdoor garden lawn mower during forward or backward movement, and driving experience of the user is facilitated to be improved.

As illustrated in FIG. 1, in an exemplary embodiment, a vertical distance H2 between a lowermost end of the support assembly 7 and an uppermost end of the cutting assembly 2 is greater than or equal to 5 mm. In this way, the support assembly 7 will not interfere with a mowing operation and lifting adjustment of the cutting assembly 2. In an exemplary embodiment of the present disclosure, the vertical distance H2 between the lowermost end of the support assembly 7 and the uppermost end of the cutting assembly 2 is 5 mm, 10 mm, or 20 mm.

As illustrated in FIG. 1, in an embodiment, a vertical distance H1 between the lowermost end of the support assembly 7 and the plane is greater than or equal to 120 mm and less than or equal to 800 mm. In this way, there is a proper distance between the support assembly 7 and the plane, which facilitates the user to get on or off the outdoor garden lawn mower. In an exemplary embodiment of the present disclosure, the vertical distance H1 between the lowermost end of the support assembly 7 and the plane is 120 mm, 500 mm, or 800 mm.

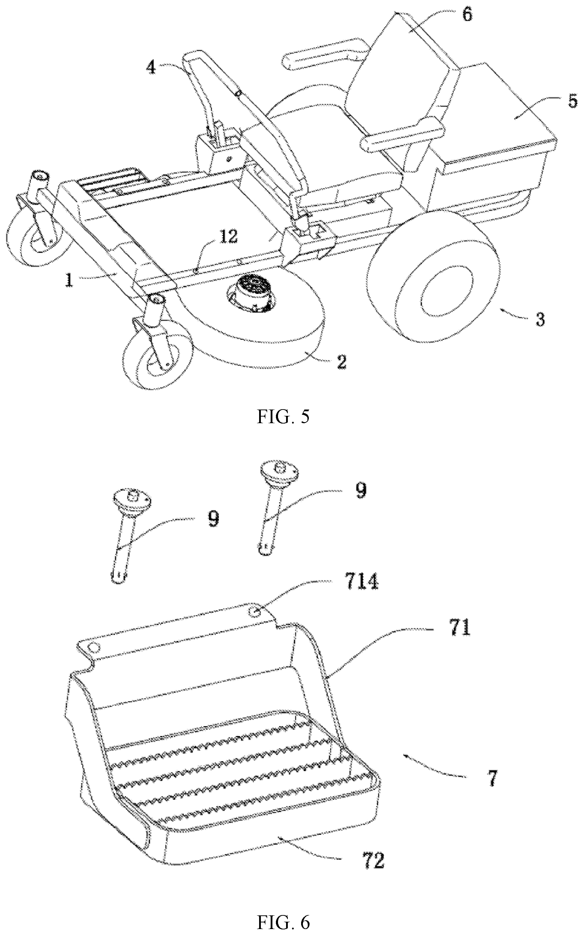

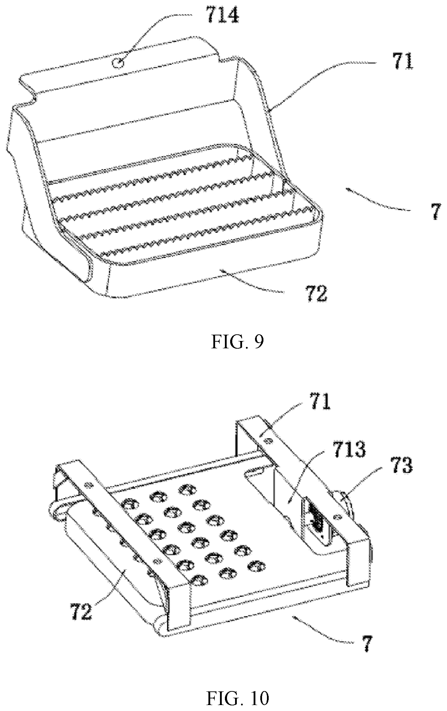

As illustrated in FIG. 6 and FIG. 9, in an embodiment, the support assembly 7 includes the support member 72 and a connector 71 connected to two ends of the support member 72. The connector 71 is connected to the main body, to realize connection of the support assembly 7 to the main body.

As illustrated in FIG. 4, in an embodiment, the support assembly 7 includes: the connector 71 connected to the main body; the support member 72; and a hinge member 74 connected to both the connector 71 and the support member 72 to enable the support member 72 to pivot relative to the connector 71 between a deployed position and a stowed position. In this way, the support assembly 7 can be stowed when not in use, which will not affect mounting or maintenance of other components and also save a space occupied by the support assembly 7. In an exemplary embodiment of the present disclosure, the hinge member includes a rotary shaft.

Further, the connector 71 has a guide groove 712 formed on the connector 71. The support member 72 is provided with a guide member 722 movable in the guide groove 712. When the support member 72 is in the deployed position, the guide member 722 is positioned at one end of the guide groove 712. At this position, one end of the guide groove 712 supports the guide member 722. In this way, the support member 72 is substantially in a horizontal state, which facilitates the user to get on the outdoor garden lawn mower through the support member 72. When the support member 72 is in the stowed position, the guide member 722 is positioned at the other end of the guide groove 712. At this position, the support member 72 is substantially in a vertical state to save a space occupied by the support member 72 and avoid interference with other components.

In an embodiment, the connector 71 may be fixedly connected to the support member 72 by welding.

As illustrated in FIG. 5 and FIG. 6, in an embodiment, an embodiment of the present disclosure further provides the support assembly 7. The support assembly 7 is removable from the first mounting part and is mountable to the second mounting part.

In an exemplary embodiment, the first mounting part and the second mounting part are respectively located at two sides of the main frame 1 in the direction of the first straight line 101. Thus, the support assembly 7 is facilitated to be mounted to either side or both sides of the main frame 1. Therefore, the user can get on the outdoor garden lawn mower from one side of the main frame 1 when the other side of the main frame 1 is inaccessible.

In an exemplary embodiment, the first mounting part has the same structure as the second mounting part. In this way, manufacturing of the first mounting part and the second mounting part is simpler and more convenient, and the operation is easy and efficient when the support assembly 7 is removed from one side of the main frame 1 and mounted to the other side of the main frame 1.

In an exemplary embodiment, each of the first mounting part and the second mounting part is a first connection hole 12 formed on the main frame 1. The support member 72 has a second connection hole 714 formed on the support member 72. The first connection hole 12 is connected to the second connection hole 714 by an insertion member 9 to assemble the support assembly 7 to the main frame 1. The support assembly 7 is assembled to the main frame 1 by the insertion member 9, enabling quick assembly and disassembly of the support assembly 7 on the main frame 1. The plug connector 9 may be a latch or the like.

In another embodiment, the first connection hole 12 may also be connected to the second connection hole 714 via an engagement of a bolt and a nut without the insertion member 9. Thus, removable connection between the support assembly 7 and the main frame 1 can be achieved.

As illustrated in FIG. 7, FIG. 8, and FIG. 9, embodiments of the present disclosure further provides a locking assembly 8. The locking assembly 8 is disposed on the main body and has a locked state and an unlocked state. When the locking assembly 8 is in the locked state, the support assembly 7 is locked to the first mounting part or the second mounting part, enabling the support assembly 7 to be connected to the main body; and when the locking assembly 8 is in the unlocked state, the support assembly 7 is unlocked from the first mounting part or the second mounting part, enabling the support assembly 7 to be separated from the main body.

In an exemplary embodiment of the present disclosure, each of the first mounting part and the second mounting part is the first connection hole 12 formed on the main body, and the support assembly 7 has a second connection hole 714 formed on the support assembly 7. The locking assembly 8 is disposed adjacent to the first connection hole 12 on the main frame 1 and includes a mounting frame, a movable member 82, and an elastic member 83. The elastic member 83 is connected to both the mounting frame and the movable member 82. The elastic member 83 is configured to constantly apply a restoring force to the movable member 82, enabling the movable member 82 to remain inserted into the first connection hole 12 and the second connection hole 714 when the support assembly 7 is locked to the main body. Thus, the support assembly 7 is fixedly mounted to the main body.

In an exemplary embodiment of the present disclosure, the mounting frame includes a base 81 and two mounting plates 811 arranged in parallel and spaced apart from each other on the base 81. Each of the two mounting plate 811 has a mounting hole, and the mounting holes on the two mounting plates 811 are coaxial. The movable member 82 is configured to be inserted into the two mounting holes, and a limiting block 84 is disposed on a part of the movable member 82 between the two mounting holes. The elastic member 83 is sleeved on the movable member 82. One end of the elastic member 83 abuts against the limiting block 84, and the other end of the elastic member 83 abuts against the mounting plate 811 at an end away from the limiting block 84. In this way, the elastic member 84 constantly applies an elastic restoring force to the movable member 82 through the limiting block 84. Thus, when no external force is applied and the support assembly 7 is locked to the main body, the movable member 82 can remain inserted into the first connection hole 12 and the second connection hole 714. The movable member 82 has an L-shaped structure to facilitate operation by the user. In an exemplary embodiment of the present disclosure, the elastic member 83 is a compression spring, which is easy to mount and low in procurement cost.

In another embodiment, the locking assembly 8 may also be disposed on the support assembly 7. This arrangement facilitates quick assembly and disassembly of the support assembly 7 on the main body via the locking assembly 8.

As illustrated in FIG. 10 to FIG. 17, in an embodiment, the support assembly 7 includes a connector 71, a support member 72, and a displacement driving member 73 connected between the connector 71 and the support member 72. The displacement driving member 73 has a first mode and a second mode. The displacement driving member 73 is configured to: drive, in the first mode, the support member 72 to be at least partially positioned under the main frame 1; and drive, in the second mode, the support member 72 to move out from under the main frame 1, enabling the support member to support the user to get on the outdoor garden lawn mower. The support member 72 is driven to freely extend out from under the main frame 1 or retract back under the main frame 1 by the displacement driving member 73, which is beneficial to retract back the support member 72 when the outdoor garden lawn mower is not in use, reducing the space occupied by the support member 72 and the interference of the support member 72 to other components.
As illustrated in FIG. 10 to FIG. 14, in an exemplary embodiment, the connector 71 has a sliding groove 715 formed on the connector 71. The support member 72 is provided with a pulley 723 movable in the sliding groove 715. A lead screw 732 is connected between the connector 71 and the support member 72. The lead screw 732 is configured to drive, when the lead screw 732 rotates clockwise or counterclockwise, the support member 72 to extend out from under the main frame 1 or retract back under the main frame 1. The connector 71 is formed of a frame enclosed by four plate members arranged in pairs. Each of two corresponding plate members has the sliding groove 715. Each of two sides of the support member 72 is provided with the pulley 723. The two pulleys 723 are slidably engaged into the two sliding grooves 715 respectively. At least two pulleys 723 are arranged at intervals on each side of the support member 72 to support the support member 72 and withstand a pressure from user stepping. In an exemplary embodiment of the present disclosure, two pulleys 723 are provided on each side of the support member 72.

In other embodiments of the present disclosure, to avoid interfering with extension and retraction of the support member 72, the other two plate members are arranged at a relatively high level. Each plate member has a through hole to fix the connector 71 to the main frame 1. In this way, the connector 71 can support the support member 72 by utilizing the main frame 1.

Further, the connector 71 is provided with a positioning member 713 at an end of the connector 71 close to the displacement driving member 73. The lead screw 732 is disposed on the positioning member 713 and rotatable clockwise or counterclockwise on the positioning member 713. The positioning member 713 is a plate member integrally formed with the connector 71. The plate member has a hole formed on the plate member, and a bearing is disposed in the hole. One end of the lead screw 732 is disposed in an inner bore of the bearing and is rotatable clockwise or counterclockwise on the bearing.

To enable the lead screw 732 to drive the support member 72 to extend out from under the main frame 1 or retract back under the main frame 1 through rotation, in the present disclosure, a connection plate is disposed on the support member 72. The connection plate has a threaded hole formed on the connection plate, and the lead screw 732 is connected to the threaded hole. Rotation of the lead screw 732 may drive the connection plate to move, which in turn moves the support member 72.

In an embodiment, the displacement driving member 73 is a servo motor or a reduction motor. An output end of the displacement driving member 73 is connected to the lead screw 732 and drives the lead screw 732 to rotate synchronously.

In a further embodiment, the connector 71 is rotatably connected to the main frame 1. The support member 72 is fixed to the connector 71 and configured to rotate with the connector 71. The connector 71 is further provided with a first gear 711, and the displacement driving member 73 is provided with a second gear 731 meshed with the first gear 711. The first gear 711 is rotatable through driving of the second gear 731 to drive the connector 71 to move the support member 72 to extend out from under the main frame 1 or retract back under the main frame 1. In an exemplary embodiment of the present disclosure, the main frame 1 has a rotation hole in an upper-down direction. The connector 71 is a rotary shaft with a limiting cap arranged at one end of the connector 71. The rotary shaft is inserted into the rotation hole, and the limiting cap abuts against an upper end surface of the main frame 1. The rotary shaft is provided with the first gear 711 at a lower end face of the main frame 1. The support member 72 is fixed to the rotary shaft and configured to rotate synchronously with the rotary shaft.

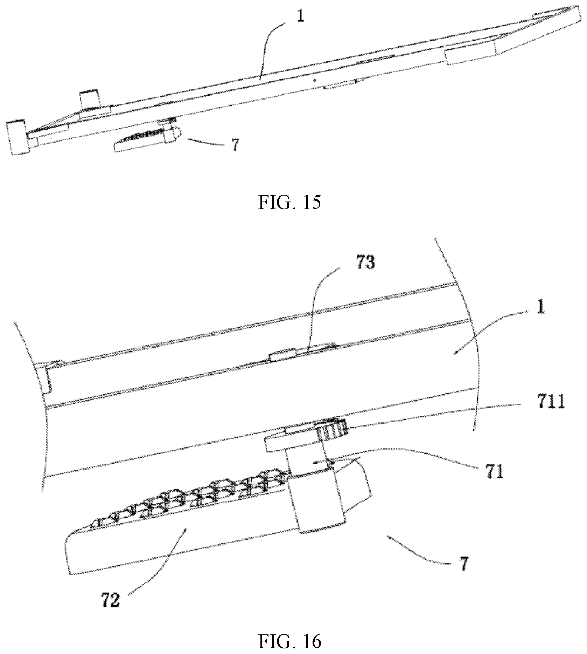

As illustrated in FIG. 15 to FIG. 17, in an embodiment, the displacement driving member 73 is disposed on the main frame 1. In an exemplary embodiment of the present disclosure, the displacement driving member 73 is the servo motor or the reduction motor. An output shaft of the displacement driving member 73 is provided with the second gear 731. The second gear 731 is meshed with the first gear 711 and is configured to drive the first gear 711 to rotate. Thus, the first gear 711 may drive the connector 71 and the support member 72 on the connector 71 to rotate, enabling the support member 72 to extend out from under the main frame 1 or retracts back under the main frame 1 through rotation. Such an arrangement facilitates retracting the support member 72 when not in use and reduces interference with other components. In an exemplary embodiment of the present disclosure, the first gear 711 includes a fan-shaped gear.

As illustrated in FIG. 6 and FIG. 9, in an embodiment, the support assembly 7 includes the support member 72. The support member 72 consists of a frame and a plurality of connection plates arranged at intervals in the frame. The frame is connected to the plurality of connection plates by welding. Anti-slip textures are provided on force-bearing surfaces of the frame and the plurality of connection plates to provide an anti-slip effect when the user steps on the support member 72.

In another embodiment, the support assembly 7 includes the support member 72 made of aluminum alloy material.

As illustrated in FIG. 4, in another embodiment, the support assembly 7 includes the support member 72. The support member 72 is formed as a single integral plate-shaped member. The support member 72 is provided with a plurality of protrusions 721 for anti-slip, and each of the plurality of protrusions 721 has a hole extending through a front surface and a back surface of the support member 72, to achieve the anti-slip effect when the user steps on the support member 72.

In another embodiment, the support assembly 7 includes the support member 72. The support member 72 is formed as the single integral plate-shaped member. An anti-slip pad is disposed on a force-bearing surface of the support member 72, to achieve the anti-slip effect when the user steps on the support member 72.

The present disclosure is not limited to the specific embodiments described above. Those of ordinary skill in the art can readily appreciate that there are many alternative solutions for the outdoor garden lawn mower of the present disclosure without departing from the principles and scope of the present disclosure. The protection scope of the present disclosure is according to the content of the appended claims.

## Claims

1. An outdoor garden lawn mower, comprising:
a main body comprising a main frame, wherein the main frame is provided with:
a seat for a user to sit;
a cutting assembly configured to cut vegetation;
a travelling assembly configured to support the outdoor garden lawn mower to travel on a plane in a direction of a first straight line;
an operation assembly for the user to operate to control travelling of the outdoor garden lawn mower; and
a power supply device configured to supply power to at least one of the cutting assembly and the travelling assembly;
a first mounting part and a second mounting part that are arranged on the main body, the first mounting part being different from the second mounting part; and
at least one support assembly configured to be connected to at least one of the first mounting part and the second mounting part to support the user to get on the outdoor garden lawn mower.

2. The outdoor garden lawn mower according to claim 1, wherein the travelling assembly comprises front travelling wheels and rotary members, each of the front travelling wheels being supported by the respective rotary member for rotation in a radial direction of the front travelling wheel, wherein:
each of the rotary members is rotatable about a first axis as a center of rotation; and
a vertical distance between the first axis and the support assembly in the direction of the first straight line is greater than or equal to 150 mm and less than or equal to 300 mm.

3. The outdoor garden lawn mower according to claim 2, wherein the vertical distance between the first axis and the support assembly in the direction of the first straight line is greater than a turning radius of the front travelling wheel.

4. The outdoor garden lawn mower according to claim 1, wherein the cutting assembly further comprises a cutting motor,
wherein a vertical distance between the cutting motor and the support assembly in the direction of the first straight line is greater than or equal to 50 mm and less than or equal to 500 mm.

5. The outdoor garden lawn mower according to claim 1, wherein the support assembly comprises a support member,
wherein a length of the support member in the direction of the first straight line is greater than or equal to 50 mm and less than or equal to 400 mm.

6. The outdoor garden lawn mower according to claim 1, wherein:
the support assembly comprises a support member; and
the travelling assembly comprises rear travelling wheels, each of the rear travelling wheels being rotatable about a second axis as a center of rotation,
wherein a width of the support member in a direction of the second axis is greater than or equal to 100 mm and less than or equal to 250 mm.

7. The outdoor garden lawn mower according to claim 1, wherein the travelling assembly comprises rear travelling wheels, each of the rear travelling wheels being rotatable about a second axis as a center of rotation,
wherein a vertical distance between the second axis and the support assembly in the direction of the first straight line is greater than or equal to 600 mm and less than or equal to 850 mm.

8. The outdoor garden lawn mower according to claim 1, wherein:
the cutting assembly further comprises a cutting motor;
the travelling assembly comprises rear travelling wheels, each of the rear travelling wheels being rotatable about a second axis as a center of rotation,
wherein a vertical distance between the cutting motor and the support assembly in a direction of the second axis is greater than or equal to 300 mm.

9. The outdoor garden lawn mower according to claim 1, wherein:
the travelling assembly comprises two rear travelling wheels, and each of the two rear travelling wheels being rotatable about a second axis as a center of rotation, wherein a distance between an outermost side of one of the two rear travelling wheels and an outermost side of the other one of the two rear travelling wheels in a direction of the second axis is defined as a first distance; and
two support assemblies are disposed on the main body, wherein a distance between an outermost side of one of the two support assemblies and an outermost side of the other one of the two support assemblies in the direction of the second axis is defined as a second distance,
wherein the first distance is greater than the second distance.

10. The outdoor garden lawn mower according to claim 1, wherein a vertical distance between a lowermost end of the support assembly and an uppermost end of the cutting assembly is greater than or equal to 5 mm.

11. The outdoor garden lawn mower according to claim 1, wherein a vertical distance between a lowermost end of the support assembly and the plane is greater than or equal to 120 mm and less than or equal to 800 mm.

12. The outdoor garden lawn mower according to claim 1, wherein the support assembly comprises:
a connector connected to the main body;
a support member; and
a hinge member connected to both the connector and the support member to enable the support member to pivot relative to the connector between a deployed position and a stowed position.

13. The outdoor garden lawn mower according to claim 12, wherein the connector has a guide groove formed on the connector, and wherein the support member is provided with a guide member movable in the guide groove, wherein:
when the support member is in the deployed position, the guide member is positioned at one end of the guide groove;
when the support member is in the stowed position, the guide member is positioned at the other end of the guide groove.

14. An outdoor garden lawn mower, comprising:
a main frame, wherein the main frame is provided with:
a seat for a user to sit;
a cutting assembly configured to cut vegetation;
a travelling assembly configured to support the outdoor garden lawn mower to travel on a plane in a first straight line direction;
an operation assembly for the user to operate to control travelling of the outdoor garden lawn mower; and
a power supply device configured to supply power to at least one of the cutting assembly and the travelling assembly;
a first mounting part and a second mounting part that are arranged on the main frame, the first mounting part being different from the second mounting part; and
at least one support assembly configured to be connected to at least one of the first mounting part and the second mounting part, wherein the at least one support assembly is removable from the first mounting part and is mountable to the second mounting part.

15. The outdoor garden lawn mower according to claim 14, wherein the first mounting part and the second mounting part are respectively located at two sides of the main frame in the direction of the first straight line.

16. The outdoor garden lawn mower according to claim 14, wherein the first mounting part has the same structure as the second mounting part.

17. The outdoor garden lawn mower according to claim 14, wherein:
each of the first mounting part and the second mounting part is a first connection hole formed on the main frame; and
the support member has a second connection hole formed on the support member,
wherein the first connection hole is connected to the second connection hole by an insertion member to assemble the support assembly to the main frame.

18. The outdoor garden lawn mower according to claim 14, wherein:
the travelling assembly comprises front travelling wheels and rotary members, each of the front travelling wheels being supported by the respective rotary member for rotation in a radial direction of the front travelling wheel, wherein:
each of the rotary members is rotatable about a first axis as a center of rotation; and
a vertical distance between the first axis and the support assembly in the direction of the first straight line is greater than or equal to 150 mm and less than or equal to 300 mm.

19. The outdoor garden lawn mower according to claim 14, wherein the travelling assembly comprises rear travelling wheels, each of the rear travelling wheels being rotatable about a second axis as a center of rotation, wherein a vertical distance between the second axis and the support assembly in the direction of the first straight line is greater than or equal to 600 mm and less than or equal to 850 mm.

20. An outdoor garden lawn mower, comprising:
a main body comprising a main frame, wherein the main frame is provided with:
a seat for a user to sit;
a cutting assembly configured to cut vegetation;
a travelling assembly configured to support the outdoor garden lawn mower to travel on a plane in a first straight line direction;
an operation assembly for the user to operate to control travelling of the outdoor garden lawn mower; and
a power supply device configured to supply power to at least one of the cutting assembly and the travelling assembly;
a first mounting part and a second mounting part that are arranged on the main body, the first mounting part being different from the second mounting part;
at least one support assembly configured to be removably connected to the main body to support the user to get on the outdoor garden lawn mower; and
a locking assembly disposed on the main body, the locking assembly having a locked state and an unlocked state, wherein:
when the locking assembly is in the locked state, the support assembly is locked to the first mounting part or the second mounting part, enabling the support assembly to be connected to the main body; and
when the locking assembly is in the unlocked state, the support assembly is unlocked from the first mounting part or the second mounting part, enabling the support assembly to be separated from the main body.

21. The outdoor garden lawn mower according to claim 20, wherein:
each of the first mounting part and the second mounting part is a first connection hole formed on the main body, and the support assembly has a second connection hole formed on the support assembly;
the locking assembly is disposed adjacent to the first connection hole on the main frame, and the locking assembly comprises a mounting frame, a movable member, and an elastic member, wherein the elastic member is connected to both the mounting frame and the movable member, and wherein the elastic member is configured to constantly apply a restoring force to the movable member, enabling the movable member to remain inserted into the first connection hole and the second connection hole when the support assembly is locked to the main body.

22. An outdoor garden lawn mower, comprising:
a main frame, wherein the main frame is provided with:
a seat for a user to sit;
a cutting assembly configured to cut vegetation;
a travelling assembly configured to support the outdoor garden lawn mower to travel on a plane in a first straight line direction;
an operation assembly for the user to operate to control travelling of the outdoor garden lawn mower; and
a power supply device configured to supply power to at least one of the cutting assembly and the travelling assembly;
a first mounting part and a second mounting part that are arranged on the main frame, the first mounting part being different from the second mounting part; and
at least one support assembly configured to be connected to at least one of the first mounting part and the second mounting part, wherein the at least one support assembly comprises a connector, a support member, and a displacement driving member connected between the connector and the support member, wherein the displacement driving member has a first mode and a second mode, wherein:
the displacement driving member is configured to:
drive, in the first mode, the support member to be at least partially positioned under the main frame; and
drive, in the second mode, the support member to move out from under the main frame, enabling the support member to support the user to get on the outdoor garden lawn mower.

23. The outdoor garden lawn mower according to claim 22, wherein:
the connector has a sliding groove formed on the connector;
the support member is provided with a pulley movable in the sliding groove; and
a lead screw is connected between the connector and the support member,
wherein the lead screw is configured to drive, when the lead screw rotates clockwise or counterclockwise, the support member to extend out from under the main frame or retract back under the main frame.

24. The outdoor garden lawn mower according to claim 23, wherein the connector is provided with a positioning member at an end of the connector adjacent to the displacement driving member, wherein the lead screw is disposed on the positioning member and rotatable clockwise or counterclockwise on the positioning member.

25. The outdoor garden lawn mower according to claim 22, wherein:
the connector is rotatably connected to the main frame;
the support member is fixed to the connector and configured to rotate with the connector;
the connector is further provided with a first gear, and the displacement driving member is provided with a second gear meshed with the first gear, wherein the first gear is rotatable through driving of the second gear to drive the connector to move the support member to extend out from under the main frame or retract back under the main frame.
